# EUROPEAN PATENT SPECIFICATION

(11) **EP 2 239 973 B1**
(45) Date of publication and mention of the grant of the patent: **06.04.2016**
(21) Application number: 09157683.5
(22) Date of filing: 09.04.2009
(51) Int. Cl.: H04W 4/16, H04W 8/22, H04W 4/10

(54) **Recording communications**
Aufzeichnung von Kommunikationen
Enregistrement de communications

(43) Date of publication of application: 13.10.2010
(73) Proprietor: Airbus Defence and Space Oy, 00380 Helsinki (FI)
(72) Inventor: Jokinen, Vesa-Matti, 02600 Espoo (FI)
(74) Representative: Kolster Oy Ab

(56) References cited:
- EP-A- 2 003 912
- WO-A2-2005/079241
- GB-A- 2 227 394
- US-A1- 2007 111 754
- "Terrestrial Trunked Radio (TETRA); Security; Lawful Interception (LI) interface; ETSI EN 301 040" ETSI STANDARDS, LIS, SOPHIA ANTIPOLIS CEDEX, FRANCE, vol. TETRA-6, no. V2.1.1, 1 March 2006 (2006-03-01), XP014033804 ISSN: 0000-0001

## Description

### Field of the invention

The present invention relates to recording communications between communicating parties.

### Background of the invention

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. Consequently PMR networks are often used in emergency scenarios that may influence people's health or even life.

One example technology that is used in PMR networks is Terrestrial Trunked Radio Access (TETRA). In TETRA, terminals may communicate using direct communications links or via a network infrastructure. Accordingly the terminals may operate in different modes. When terminals communicate via a direct link, the terminals operate in a Direct Mode Operation (DMO) and when terminals communicate via the network infrastructure, the terminals operate in a Trunked Mode Operation (TMO).

A dispatcher station connected to the infrastructure of the PMR network may be used to give commands and instructions to the personnel involved in an emergency situation. The dispatcher station may be for example an emergency centre that may be reached by the public by dialling the emergency number. Therefore, the dispatcher station may also be connected to the Public Switched Telephone Network (PSTN) to receive the emergency calls.

The dispatcher station may record the commands that are given to the personnel in the emergency situation. Also the acknowledgements to the commands may be recorded. However, if a command is given to a group of people, acknowledgement has to be received and recorded from all the people in the group in order to ascertain that everyone received the given commands. This may be time consuming with large groups. Furthermore, it may be that a simple command may be distorted or even become unintelligible when transmitted from the dispatcher station to the personnel on the field. Accordingly, even though the acknowledgement of a person would be received at the dispatcher station, there is no way of knowing how the actual command was, as received by the person, and if the command was distorted.

EP 2003912 A1 discloses storing and control of transmitted data in a TETRA network. Recording is implemented in a recording apparatus A of a switching equipment S1 under control of a control centre K.

An additional challenge related to PMR technology is that terminals may use both DMO and TMO for communications. Therefore, a dispatcher station connected to the TETRA infrastructure may only record commands given and acknowledgements received from TETRA terminals operating in TMO. When the terminals use DMO, the terminals may communicate over a direct link between other DMO capable terminals. However, as the communications during DMO take place directly between terminals, the dispatcher station cannot record the communications between the terminals. Therefore, the reconstruction of the DMO communications later on is not possible. Consequently, it can not be verified if commands that were given during DMO communications by one communicating party to another were actually received and/or executed by the other party.

### Brief description of some examples of the invention

An object of the present invention is thus to provide a method, an apparatus, system and a computer program product so as to salve at least one of the above problems. The objects of the invention are achieved by a method and an arrangement, which are characterized by what is stated in the independant claims. The preferred embodiments of the invention are disclosed in the dependent claims.

According to an aspect of the invention there is provided a method comprising determining an operation mode of a terminal, and recording communications data of the terminal, on the basis of the determined operation mode.

According to another aspect of the invention there is provided an apparatus comprising means for determining an operation mode of a terminal, and means for recording communications data of the terminal, on the basis of the determined operation mode.

According to another aspect of the invention there is provided a system comprising an apparatus according to an aspect, and a server comprising means for reconstructing recorded communications.

According to another aspect of the invention there is provided a computer program product comprising computer program instructions that when executed on in a processor causes the processor to execute the method according an aspect.

Although the various aspects, embodiments and features of the invention are recited independently, it should be appreciated that all combinations of the various aspects, embodiments and features of the invention are possible and within the scope of the present invention as claimed.

As an advantage, the recording may be adapted to different operation modes of the terminal. When the recording is adapted to different operation modes, the existing recording means available via certain operation modes may be utilized. In this way the size of the recording may be kept smaller than if recording would be performed all the time.

Further advantages will become apparent from the accompanying description.

### Brief description of the drawings

In the following the invention will be described in greater detail with reference to the accompanying drawings, in which
Figure 1 is illustrates a network architecture suitable for carrying out an embodiment of the invention;
Figure 2 illustrates an apparatus according to an embodiment of the invention;
Figure 3 illustrates a protocol stack according to an embodiment of the invention;
Figure 4 shows a data structure according to an embodiment of the invention;
Figure 5 shows a signalling chart according to an embodiment of the invention;
Figure 6 shows a flow chart according to an embodiment of the invention.

### Detailed description of the invention

Exemplary embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present invention is applicable to any user terminal, server, application server, corresponding component, and/or to any communication system or any combination of different communication systems. The communication system may be a fixed communication system or a wireless communication system or a communication system utilizing both fixed networks and wireless networks. The protocols used, the specifications of communication systems, transmitters, user terminals, base stations and access points, especially in wireless communication, develop rapidly. Such development may require extra changes to an embodiment. Therefore, all words and expressions should be interpreted broadly and they are intended to illustrate, not to restrict, the embodiment.

Embodiments of the present invention may be implemented in various devices and systems that transmit radio signals such as handheld and infrastructure communications devices. Examples of the devices comprise user equipment (UE), mobile phones, base stations and servers, for example.

User equipment may refer to any user communication device. A term "user equipment" as used herein may refer to any device having a communication capability, such as a wireless mobile terminal, a PDA, a smart phone, a personal computer (PC), a laptop computer, a desktop computer, etc. For example, the wireless communication terminal may be a TETRA, an UMTS or GSM/EDGE smart mobile terminal.

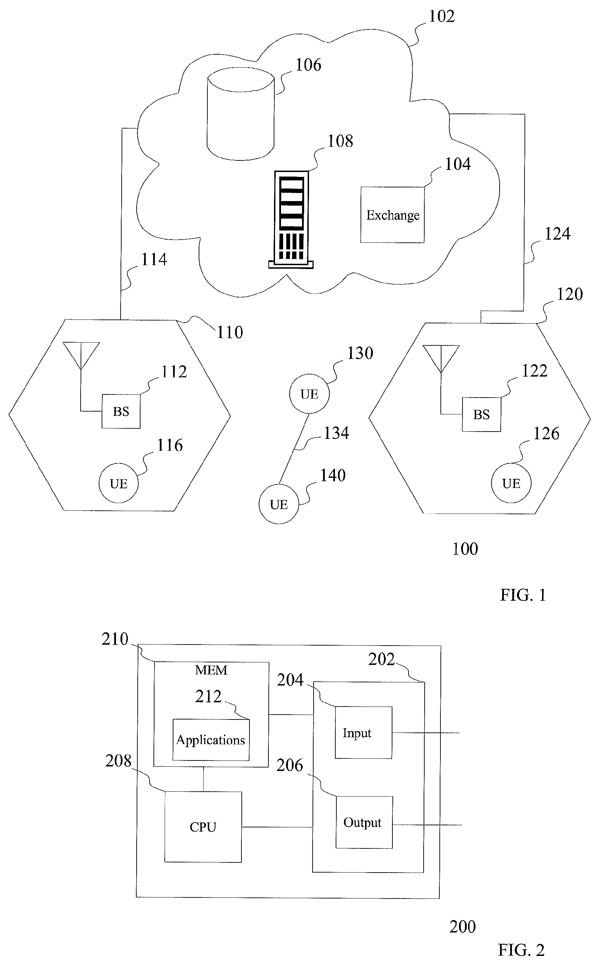

Figure 1 shows a simplified system architecture of a communication system according to an embodiment of the invention only showing some elements and functional entities, all being logical units whose physical implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for group communication as scuh, are irrelevant to the actual invention. Therefore, they need not be discussed in more detail here.

In the network architecture 100 in Figure 1 is presented an infrastructure network 102 that may be accessed via BSs 112 and 122. The BSs 112 and 122 provide radio signal coverage in the respective coverage areas 110 and 120. User Equipment (UE) 116 and UE 126 reside in the coverage areas of the BSs. Accordingly UE 116 may communicate wirelessly with BS 112 and UE 126 may communicate wirelessly with BS 122. By connecting to the BSs, the UE may establish connections between each other, to other networks and/or to the network infrastructure.

UEs 130 and 140 reside outside the coverage areas of the BSs and they can not communicate with the BSs. However, UE 130 and 140 may use direct communications between them. Thus, UE 130 and UE 140 may connect using a direct connection 134, where there is no intermediary infrastructure or equipment. In order for UE 130 and UE 140 to receive and transmit signals using the direct connection 134, the UE 130 and UE 140 have to reside within each other's coverage areas.

In an embodiment of the invention, the BS 112 may connect to the infrastructure network via a connection 114 and BS 122 may connect to the infrastructure network 102 via a connection 124. The infrastructure network may be a core network comprising one or more exchanges 104, databases 106 and application servers 108 that provide services to the UE connected to the network via BSs 112 and 122. The connections 114 and 124 may employ different or the same technologies. Examples of the technologies comprise, but are not limited to, Internet Protocol (IP) and E1. Connections between the exchanges, databases and application servers in the infrastructure network may employ the same technologies as connections 114 and 124, or they may be different.

The database 106 may store subscriber data such as subscriber identifier and group identifiers associated with the subscriber. The stored subscriber data may be used to identify the UE connecting to the network.

The application server 108 may comprise service logic for providing one or more services in the network. The application server may also provide storage for application specific data. Accordingly, the application server may host applications that provide the services.

The switch 104 may comprise signalling means and other functional units that enable subscriber lines, telecommunication circuits and/or other functional units to be interconnected as required by individual users. A switch may also include the function of the router. Accordingly, the switch may be configured to route Internet Protocol (IP) packets.

The connections in the above embodiments may be wired or wireless. A wireless connection may be implemented with a wireless transceiver operating according to the TETRA (Terrestrial Trunked Radio), LTE (Long Term Evolution), GSM (Global System for Mobile Communications), WCDMA (Wideband Code Division Multiple Access), WLAN (Wireless Local Area Network), WiMAX (Worldwide Interoperability for Microwave Access) or Bluetooth® standard, or any other suitable standard/non-standard wireless communication means. A wired connection may be implemented for example using Asynchronous Transfer mode (ATM), Ethernet, E1 or T1 lines.

In an embodiment of the invention in Figure 1, where the network 100 is a TETRA network, the BS 112 and 122 in Figure 1 provide access to the TETRA infrastructure 102. Accordingly, UE 116 and UE 126 may operate in TETRA TMO to access the TETRA infrastructure network. UE 116 and UE 126 may also operate using TETRA DMO. The DMO may be used by the UE 116 and UE 126 to provide access to TETRA infrastructure for UE that operate in DMO.

TETRA UE 130 and TETRA UE 140 outside the coverage area of the infrastructure network may communicate using DMO on the connection 134. The UE 130 and the UE 140 may use the DMO connection 134 for direct communications without the support of the TETRA infrastructure. The TETRA UE 130 and 140 may connect to the TETRA infrastructure when they are in the coverage area of the BS 112 or 122.

Figure 2 is a block diagram of an apparatus 200 according to an embodiment of the invention. Although the apparatus has been depicted as one entity, different modules and memory may be implemented in one or more physical or logical entities. The apparatus may be a terminal suitable for operating as a termination point for telecommunication sessions. Examples of the apparatus include but are not limited to UE, a mobile phone, communicator, PDA, application server or a computer.

The apparatus 200 comprises an interfacing unit 202, a central processing unit (CPU) 208, and a memory 210, that are all being electrically interconnected. The interfacing unit comprises an input 204 and an output unit 206 that provide, respectively, the input and output interfaces to the apparatus. The input and output units may be configured or arranged to send and receive messages according to one or more protocols used in the above-mentioned communication standards to achieve the functionality of an embodiment of the present invention. The memory may comprise one or more applications 212 that are executable by the CPU.

In an embodiment of the invention the interfacing unit comprises units for interfacing with the user of the apparatus so as to input and output information with the user. Accordingly, the input unit may comprise for example a microphone for receiving audio signals and the output unit may comprise for example a speaker for sending audio signals. In this way, audio such as speech may be input to the apparatus and output from the apparatus for the purpose of two-way voice calls for example.

In an embodiment of the invention, the interfacing unit comprises a location unit that is configured to provide a location of the apparatus. The location unit may a GPS (Global Positioning System) module that is configured to receive a GPS signal and calculate the location of the apparatus. The location unit may provide the location of the apparatus as output to be used by other units or applications 212 in the apparatus. Accordingly, the input and output units of the apparatus may be configured to input GPS signal and output the location of the apparatus.

It should be appreciated that the location information may also be obtained from external devices to the apparatus, such as devices connected to the apparatus via wired or wireless connection. Accordingly, the location may be obtained from a GPS module connected to the apparatus via Bluetooth, for example. In such case the input and output units of the interfacing unit communicate with the GPS module according to the Bluetooth communications protocol to obtain the location of the apparatus.

The CPU may comprise a set of registers, an arithmetic logic unit, and a control unit. The control unit is controlled by a sequence of program instructions transferred to the CPU from the memory. The control unit may contain a number of microinstructions for basic operations. The implementation of micro-instructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions. The memory may be a volatile or a non-volatile memory, for example EEPROM, ROM, PROM, RAM, DRAM, SRAM, firmware, programmable logic, etc.

In an embodiment of the invention, the CPU may comprise a clock providing timing information to be used in by the other units and/or applications in the apparatus.

An embodiment provides a computer program 212 embodied on a distribution medium, comprising program instructions which, when loaded into an electronic apparatus, cause the CPU to perform according to an embodiment of the present invention.

The computer program 212 may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or it may be distributed amongst a number of computers.

In an embodiment the computer program may be a recorder application for recording communications data. In another embodiment the computer program may be an application for reconstructing communications from recorded communications data.

The apparatus 200 may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus 200, necessary processing capacity, production costs, and production volumes, for example.

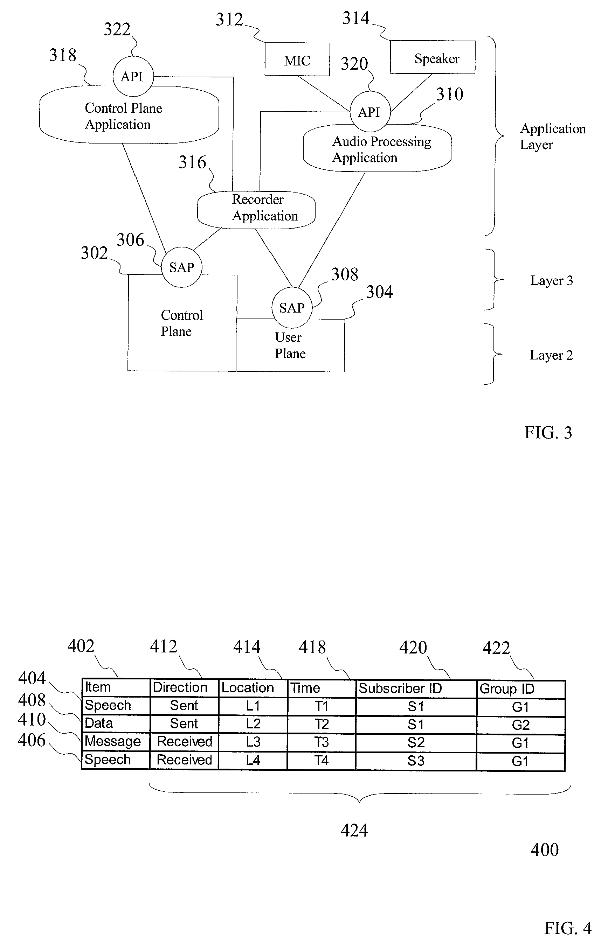

Figure 3 illustrates a protocol stack 300 comprising a recorder application for recording communications data according to an embodiment of the invention. The protocol stack only shows the part of the protocol stack relevant to the invention. The protocol stack may be stored in the memory 210 of the apparatus 200 to be executed by the CPU 208. Accordingly, the protocol stack may be used by apparatuses in the communications system illustrated in Figure 1. When the protocol stack is implemented in an apparatus such as the apparatus 200 in Figure 2, the recorder application may record the communications of the apparatus. The communications may comprise communications data comprising communications items and communications items related data (CIRD). Examples of the communications items comprise voice, video, data and/or messages that are sent from the apparatus or received in the apparatus. Further examples of the communications data will be explained with respect to Figure 4. When recording the communications, the recorder application stores the communications data to a memory. The memory may be external or internal memory to the apparatus comprising the recorder application.

The protocol stack in Figure 3 comprises an application layer and layers below the application layer, layer 2 and 3 that provide services to the application layer. The applications 310, 316 and 318 on the application layer interface with the lower layers of the stack via one or more Service Access Points (SAPs) 306, 308. Accordingly, the applications may access the services of the protocol stack on the layers below the application layer via the SAPs. The applications on the application layer may also comprise one or more Application Programming Interfaces (APIs) 320, 322 via which the services of the applications may be accessed. As an example, audio from a microphone 312 may be provided to the audio processing application 310 to be processed via the API 320. As another example a speaker 314 may receive audio to be output via the API 320 from the audio processing application.

Accordingly, audio data input from the microphone 312 may be processed in an audio processing application 310 and provided as input to the protocol stack below the application layer. Similarly, the audio processing application may receive from lower layer of the protocol stack audio data to be processed and output via the speaker 314. Also other means of input or output than the microphone and speaker may be used with the protocol stack. One example of the other means is a file comprising data to be used as input and/or output. It is apparent to a skilled person that the protocol stack may be employed in communications between apparatuses such as terminals. Accordingly, the data that is input to the protocol stack at a transmitting terminal is output from the protocol stack at a receiving terminal. For example, an utterance received at the microphone may be input to the protocol stack at the transmitting terminal, transmitted over a connection from the transmitting terminal to the receiving terminal, and received at the protocol stack of the receiving terminal that may be configured to output the received utterance via the speaker. The connection may be a radio connection between terminals, or between a terminal and a network, for example. The connection may be a TETRA connection, such as TETRA DMO or TMO connection.

In an embodiment of the invention the recorder application may receive the communications data to be recorded and/or information indicating the operation mode of the apparatus via the one or more SAPs and/or APIs. The information indicating the operation mode may comprise an identification of the operation mode, for example TETRA DMO or TETRA TMO. By receiving the information indicating the operation mode, the recording of communications data may be started adaptively.

In an embodiment the recorder application may subscribe to one or more SAPs in the protocol stack to receive communications data. The subscription to a SAP may define the type of communications data, communications data items and/or CIRD that the recorder application is subscribed to. On the basis of the subscription, data may be delivered to the recorder application automatically, when the subscribed data is available or the recorder application may receive the data in response to sending a poll for the data to the SAP. The polling may be performed periodically, for example.

In an embodiment of the invention as illustrated in Figure 3 the protocol stack 300 comprises a control plane protocol stack 302 for processing control plane data and a user plane protocol stack 304 for processing user plane data. The control plane and the user plane protocol stacks may be at least partially separate. For example the control plane stack 302 comprises protocols up to layer 3, whereas the user plane stack 304 comprises protocols up to layer 2. The user plane data may comprise user data such as audio, video and/or messages. The control plane data may comprise signalling associated with the connection used to transport user plane data.

In an embodiment of the invention, the control plane and user plane protocol stacks are according to TETRA specifications, where at least part of layer 2 protocols are shared between the control and the user plane stacks.

The control plane and user plane protocol stacks may include one or more Service Access Points (SAP) 306s to provide services to control plane applications 318 and one or more SAPs 308 to provide services to user plane applications 310, on the application layer. Accordingly, a control plane application may request services of the control plane protocol stack via SAP 306 and a user plane application may request services of the user plane protocol stack via SAP 308.

The user plane applications may comprise audio processing applications such as encoding and decoding of audio signals to enable voice communications. The user plane applications may also include data applications for transferring packet data, messaging applications such as Status Message Service, Short Message Service (SMS), Multimedia Messaging Service (MMS) and Short Data Service (SDS) to enable message communications, and encrypting/decrypting applications to provide security in the communication between terminals. The user plane applications may also, or alternatively, employ the services of the control plane protocol stack. Accordingly, the control plane applications may at least partly comprise the user plane applications and vice versa.

The audio processing application may be arranged to encode and/or decode speech for example using Algebraic Code-Excited Linear Predictive (ACELP), CELP, Linear Predictive Coding (LPC), Pulse Code Modulation (PCM), Adaptive Differential PCM (ADPCM), Vector Sum Excited Linear Prediction (VSELP), Residual Pulse Excited-Long Term Prediction (RPE), or any other speech or audio codec (coder-decoder) technology.

Accordingly, the audio processing application may be arranged to encode audio that may be received from an audio file or audio input device for example a microphone 312. The encoding may be performed using some of the above technologies. The audio may be received for encoding in audio frames of specific length. The encoded audio frames may then be provided to the user plane protocol stack via the respective SAP. The user plane protocol stack then processes the encoded frames to be sent on a communications channel.

The audio processing applications may be arranged to decode audio received from a file or from a user plane protocol stack via the respective SAP. The audio may be received for decoding in audio frames of specific length. The decoding may be performed using some of the above technologies. The decoded audio frames may be output for example to an output file or via an output device. An example of an output device is a speaker 314.

In an embodiment of the invention, the recorder application may subscribe to the user plane SAP 308 to receive communications data directly from the user pane protocol stack. In this way the recorder application may receive the communications data before the data is processed in the applications on the application layer. For example, when the audio processing applications is a speech decoder and the communications data comprises encoded speech, the recorder application receives the encoded speech before it is decoded in the audio processing application. In this way the memory consumed by the recorded communications may be kept small as the communications data may be recorded as encoded, thus in a compressed format.

In an embodiment of the invention, the recorder application is arranged to access services of other applications via APIs. In this way the recorder application may receive communications data that is already processed on the application layer. For example, when the recorder application is arranged to communicate with the audio processing application via the API 310, the audio processing application may process, for example decode, the audio received from the user plane protocol stack. In this way, the recorder application may receive decoded audio, thus the audio may be stored by the recorder application uncompressed. When the audio is stored uncompressed, the recorded communications data may be used later on without the need of decoding it.

In an embodiment of the invention, the application layer of comprises a decrypting application that decrypts communications data received at the terminal. The decrypting application may be provided with an API to allow the recorder application to access the services of the decrypting application, in a similar manner as the recorder application may access the services of the audio processing application as explained above. Accordingly, the decrypting application may be arranged to decrypt encrypted communications data received from the user plane protocol stack and/or control plane protocol stack. The recorder application may receive the decrypted communications data via the API to be included in the recording. In this way the recorded communications data may be used later on without the need to decrypt the communications data.

In an embodiment of the invention the recorder application is arranged to record encrypted communications data by subscribing to the SAP of the protocol stack that receives encrypted communications data from an encrypting application. Accordingly, the recorder application stored the recorded communications data in encrypted format and the communications data may be kept secure.

In an embodiment of the invention, the recorder application accesses the services of the control plane application via the API 322 in a similar manner as accessing the services of the user plane applications above. The control plane application may process the control plane data such as signalling information to provide communications data. The amount of data received by the recorder application may be extensive if the recorder application subscribed to receive data from the control plane SAP. When the recorder application access the control plane data via the API, the amount of data received by the recorder application may be reduced. In this way the size of the recording may be kept small and less processing is needed in the recorder application.

In the above, the different applications may also be combined to a single application to provide an API for the recorder application. Accordingly, an application may subscribe to both user plane and control plane stacks and provide an API to the recorder application to access the services of the application.

In the above, the applications in the application layer may subscribe to one or more SAPs of control plane, user plane or both control and user plane protocol stacks. The data received via the SAPs is processed in the application and may be provided to the recorder application via an API.

The information indicating the operation mode of the apparatus may be arranged to be received in the recorder application in a similar manner to the communications data as described in the above.

Figure 4 illustrates a data structure 400 of a file comprising communications data and generated by a recorder application according to an embodiment of the invention. The file may be generated by the recorder application arranged in the protocol stack of Figure 3. The file may comprise recorded communications on one or more of the connections presented in Figure 1.

The communications data may comprise one or more communications items each of which is associated with CIRD. The CIRD provides information on the stored communications items and enables reconstruction of communications between terminals afterwards.

A communications item may comprise a part or the whole communications between at least two communicating parties connected by a connection suitable for transmission of the communications items. The communications item may be a speech frame 404, an audio frame 404, a message 410 or a data packet 408, or a series of these. However, also the communications item may comprise other items sent or received from a communicating apparatus.

The CIRD may comprise data collected from at least one of the communicating apparatuses, such as terminals. In the embodiment in Figure 4, the CIRD comprises direction 412 of the communication item, location 414 of the terminal that recorded the communication item, time 418 of recording, a communicating party identifier 420 identifying the party communicating with the terminal that records the communications, and a group identifier 422 identifying the group to which the communications item has been sent to.

In an embodiment of the invention the CIRD may comprise a time 418 that indicates the time instant the communications item has been recorded by the recorder application in the communicating terminal. In this way the time at which the communications item was communicated, thus sent or received, may be stored in association with the communications item.

In an embodiment of the invention the CIRD may comprise the location 414, where the communications item was recorded. The location may be the location of the terminal that comprises the recorder application that recorded the communications item. The location may indicate the location of the user of the terminal as the terminal is usually co-located with the user.

As an advantage, the location of the terminal when the communications item was recorded may be stored in association with the communications item. In this way, the reconstruction of the recorded communications afterwards may include the location of the terminal. For example, in the reconstructed communications the movement of a user of the terminal that has received a command to move to a new location may be observed. Thus, in the reconstructed communications it may be determined from the recorded communications items, whether the command was received, and whether the user moved according to the received command.

In an embodiment of the invention the CIRD may comprise one or more identifiers identifying a communicating party that the terminal recording communications is communicating with. The communicating party may be identified by the identifier of the terminal of the party, identifier of the communicating party and/or a group identifier. Accordingly, the stored identifiers may comprise at least one from the group of: one or more subscriber 420 and/or group identifiers 422 the communications item is sent to, and one or more subscriber 420 and/or group identifiers 422 the communications item is received from.

In an embodiment of the invention, the CIRD may comprise an indication 412 whether the communications item is sent or received from the terminal, thus the direction of the communications item with respect to the terminal recording the communications.

In an embodiment of the invention, the CIRD may comprise all or part of the CIRDs in the above embodiments.

In the exemplary file in Figure 4, row 404 comprises a recorded speech item that has been sent from the terminal in location L1 at time T1. The speech item has been sent to a subscriber S1 in group G1. Row 408 comprises a recorded data item that has been sent from the terminal in location L2 at time T2 to the subscriber S1 in group G2. Row 410 comprises a recorded message that has been received in location L3 at time T3 from subscriber S2 in Group G1. Row 406 comprises a recorded speech item that has been received in location L4 at time T3 from subscriber S3 in group G1.

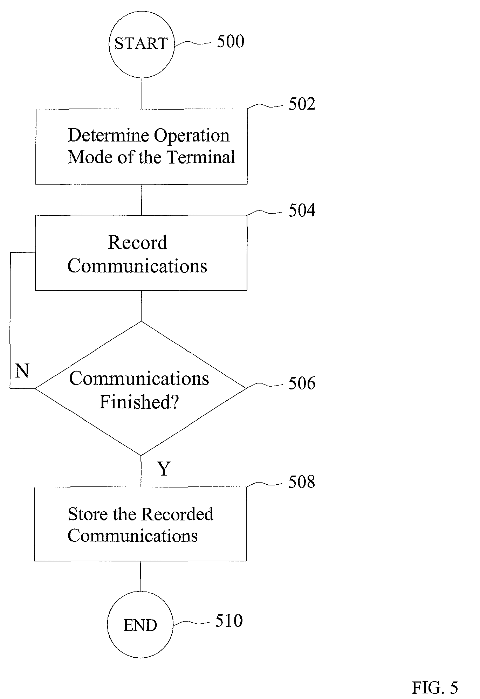

Figure 5 illustrates operation of an apparatus comprising a recorder application according to an embodiment of the invention. An example of the apparatus is illustrated in Figure 2. The apparatus may comprise a protocol stack according to Figure 3. The recorder application may record communications to one or more files of which an example is shown in Figure 4. In the following description of Figure 5 the operation of the recorder application is explained in a terminal employing TETRA technology. However, the recorder application according to the present invention may also be used in apparatuses employing other technologies.

### In 500 the process starts.

In 502 the recorder application determines an operation mode of the terminal. In an embodiment of the invention the recorder application determines that the terminal is in a direct link operation mode, where connection is established directly between terminals without the support from network infrastructure. The direct link operation mode may the TETRA DMO.

In an embodiment of the invention the direct link operation mode may be determined on the basis of data such as signalling or communications items that are sent or received on a direct connection between terminals.

In an embodiment of the invention, the direct link operation mode may be determined on the basis of the terminal being out of radio signal coverage area of the infrastructure network or the connection to the infrastructure network is not available for example due to network congestion. Accordingly, in the TETRA scenario, the recorder application detects that TETRA TMO is not available, and thus determines TETRA DMO as the operation mode of the terminal.

In 504 the recorder application records communications data of the terminal, on the basis of the determined operation mode of the terminal. The communications data may comprise communications items associated with CIRD. Accordingly, communications items and associated CIRD are stored in the memory allocated for the recorder application. The communications data may be stored in a file, a data structure, or a database, for example.

In an embodiment of the invention, the recorder application may initiate recording of communications data on the basis of the operation mode being a direct link operation mode, such as the TETRA DMO, and to stop the recording when the operating mode is an infrastructure mode of operation, such as TETRA TMO. In this way the recorder application may adapt to different operation modes of the terminal.

For example, in the infrastructure mode of operation, the network infrastructure may provide recording of communications data of the terminal. However, in the direct link operation mode the network infrastructure can not provide recording of the communications data, as the communications does not involve the network infrastructure.

Accordingly, when the recorder application records communications data on the basis of the operation mode, the recorder application may adapt its operation with respect to other recording means that may be available in some operation modes but not in others. Consequently, the storage space needed for recorded communications data may be kept small in the terminal as the recording is adaptive. Also, the recording of communications data is enabled in operation modes, where there is no connection to network infrastructure, such as in TETRA DMO.

It should be appreciated that in an embodiment of the invention the communications items of the terminal may be recorded only when communications items are sent or received from the terminal using the determined operation mode. Accordingly, the communications items may be generated in the terminal or received from the other communicating party. However, before the sending or receiving the communications items the recorder application may have initiated monitoring for sent and/or received communications items, on the basis of the determined operation mode of the terminal. Then, when the recorder application detects sent or received communications items, the communications items are recorded.

In an embodiment of the invention in 504 CIRD is stored in association with each recorded communications item.

In 506 it is determined whether the connection has ended. In an embodiment of the invention the end of the communications may be determined if the terminal may not receive or transmit communications items or other data on the connection. This may be for example due to the communicating parties loosing radio connection by being moved too far away from each other. In an embodiment the end of communications may be determined from user and/or control plane signalling, if a signalling message ending a call is detected or no communications items are sent for a predetermined period of time, for example. If the connection has ended the process continues to 508, otherwise the process continues to 504 to continue recording.

In 508 the recorded communications data is stored to the memory allocated for the recorder application. In an embodiment of the invention, the recorder application may set a flag to indicate a new recorded communications and/or close the file.

### In 510 the process ends.

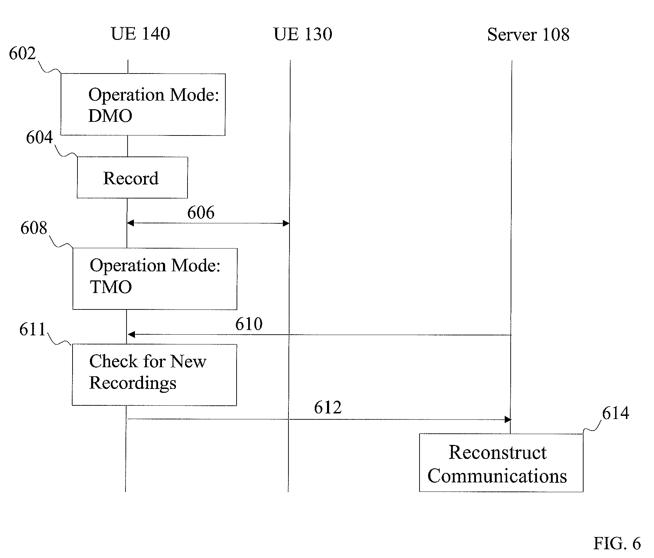

Figure 6 illustrates signalling that involves communications between communicating parties and reconstruction of the communications afterwards by an application server, according to an embodiment of the invention. In the embodiment the signalling will be explained using the context of Figure 1, where apparatuses UE 140 and UE 130 communicate over a direct link connection 134. The communications may be recorder by one or both of the UEs by employing a protocol stack comprising a recorder application, for example as illustrated in Figure 3. The communications may be reconstructed afterwards by delivering recorded communications from each of the UEs to an application server in Figure 1 that provides a centralized storage for the recorded communications.

In 602 the UE 140 operates in direct link operation mode, such as TETRA DMO. Accordingly, the communications to and from the UE 140 can not be recorded by an infrastructure network.

In 604 the UE 140 starts a recorder application. The operation of the recorder application may be according to Figure 5. Accordingly, the recorder application may be started on the basis of the operation mode being the direct link operation mode.

In an embodiment of the invention, the recorder application may monitor for communications to be recorded.

In 606, the UE 140 and UE 130 communicate. The communications may comprise one or more connection between the UEs, however only one is illustrated for the sake of clarity. The communications may comprise sending and or receiving communications data at UE 130 and/or UE 140. Accordingly, recorder application in UE 140 may record the communications data that is sent from or received at the UE 140.

In an embodiment of the invention, where the recorder application monitors for communications to be recorded in 604, the recorder application detects the communications in 606 and records the communications data sent or received at the UE 140.

In 608 the UE operates in infrastructure operation mode, such as TETRA TMO. Accordingly, the UE has changed its operation mode after the communications between UE 130 in 606 using direct link operation mode. In the infrastructure operation mode a connection exists between the UE 140 and the infrastructure network 102.

In an embodiment of the invention, in 610 the application server sends a poll message to the UE 140 for recorded communications. This may be performed by the application server in response to the operation mode of the UE changing to the infrastructure mode of operation.

When the poll message is received at the UE 140, it is determined at the UE 140 in 611 whether new recorded communications exist. This may be performed for example by checking whether a flag is set in the recorded communications to indicate that it is a new recording.

In an embodiment of the invention, the determining in 611 is performed in response to the UE 140 entering to the infrastructure operation mode.

In 612, the UE 140 sends the recorded communications data to the application server, if in 611 it was determined that new recordings exist.

In 614 the application server reconstructs the communications of the UE 140.

In an embodiment of the invention, the reconstructing comprises deriving CIRD from the received recorded communications data. The derived CIRD or a part of the CIRD may be matched with communications data and CIRD already stored in the application server. Accordingly, the application server may store communications data that relates to the recorded communications data received from UE 140. The related communications data may be identified by finding a match between the CIRD of the communications data received from UE 140 and the data already stored in the application server. In the present example, the communications data stored in the application server and relating to the communications data received from UE 140 may comprise the communications data from UE 130. Communications data from UE 130 may be received and stored to the application server in a similar manner as communications data received from UE 140. In this way related communications data from multiple communicating parties may be found in the application server.

The matching may comprise matching the identifiers of the communicating parties, group identifiers, times and/or locations between the received and stored communications data.

In an embodiment of the invention, the matching of times in the CIRDs comprises determining a time difference between the clocks used to provide the time values in each CIRD. The time difference may be use to correct time values in one of the CIRDs. In this way the correct sequence of communications items may be obtained in the reconstructed communications, even if the clocks used in recording would not have had the same time values.

In an embodiment of the invention in 614, after matching the CIRD of the received communications data with the CIRD of the stored communications data, the matching the related communications data may be stored in association with each other. In this way the reconstruction of the recorded communications data may be stored.

It should be appreciated that in 612 the recorded communications data may be received in the application server using MMSs, PMR data connection or any other type of connection.

As an advantage of employing a centralized storage and delivery of recorded communications data to the storage is that the communications of a plurality of terminals recorded in a direct link operation mode at each terminal separately may be reconstructed.

The recorder application 316 may be implemented as any kind of processor programmable to execute numeric calculations such as an embedded processor, a Digital Signal Processor (DSP), a Master Control Unit (MCU) or an Application Specific Integrated Processor (ASIP). The recorder application may also be implemented as an electronic digital computer, which may comprise a working memory (RAM), a central processing unit (CPU) or a processor, and a system clock. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

An embodiment provides a computer program embodied on a distribution medium, comprising program instructions which, when loaded into an electronic apparatus, constitute the recorder application 316 described earlier.

The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or processor or it may be distributed amongst a number of computers or processors.

The steps/points and related functions described above in Figures 5 and 6 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The recorder application illustrate a procedure that may be implemented in one or more physical or logical entities.

The techniques described herein may be implemented by various means so that an apparatus implementing one or more functions of a recorder application described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

It will be obvious to a person skilled in the art that, as the technology advances, the inventive concept can be implemented in various ways. The invention and its embodiments are not limited to the examples described above but may vary within the scope of the claims.

## Claims

1. A method by a terminal for recording communications data of the terminal (140) **characterized in that** the method comprises:
determining (502), at the terminal, an operation mode of said terminal, wherein the terminal is capable of operating in at least two operation modes comprising an infrastructure mode of operation (608) and a direct mode of operation (602);
recording, at the terminal (504), communications data of the terminal, on the basis if the determined operation mode is the direct mode of operation (602);
changing the operation mode of the terminal from the direct mode of operation to the infrastructure mode of operation;
adapting the recording on the basis of the changing of the operation mode such that the recording is stopped, when the operation mode of the terminal is the infrastructure mode of operation; and
delivering (612) the recorded communications data to a server (108), when the operation mode of the terminal is the infrastructure mode of operation (608).

2. A method according to claim 1, **characterized in that** the delivering comprises, sending (612) the recorded communications in response to receiving a poll (610) for recorded communications.

3. A method according to claim 1 or 2, **characterized in that** the delivering comprises, sending (612) the recorded communications in response to entering the infrastructure mode of operation (608).

4. A method according to any one of the preceding claims, **characterized in that** the communications data comprises a communications item (404, 406, 408, 410) and one or more of the following communications item related data in association with the communications item: item type (402), item direction (412), location (414), time (418), communicating party identifier (420), group identifier (422).

5. A terminal **characterized in that** the terminal comprises:
means for determining (502) an operation mode of the terminal, wherein the terminal is capable of operating in at least two operation modes comprising an infrastructure mode of operation and a direct mode of operation, and
means for recording (504) communications data of the terminal, on the basis of the determined operation mode is the direct mode of operation;
means for changing the operation mode of the terminal from the direct mode of operation to the infrastructure mode of operation;
means for adapting the recording on the basis of the changing of the operation mode such that the recording is stopped, when the operation mode of the terminal is the infrastructure mode of operation; and
means for delivering the recorded communications data to a server, when the operation mode of the terminal is infrastructure mode of operation.

6. A terminal according to claim 5, **characterized in that** the terminal comprises means for sending the recorded communications in response to receiving a poll (610) for recorded communications.

7. A terminal according to claim 5 or 6, **characterized in that** the terminal comprises means for sending (612) the recorded communications in response to entering the infrastructure operation mode (608).

8. A system **characterized in that** the system comprises a terminal according to any one of claims 5 to 7, and a server (108) comprising means for reconstructing (614) communications from the recorded communications data received from the terminal.

9. A computer program product **characterized in that** the computer program product comprises computer program instructions that when executed on in a processor causes the processor to execute the method according to any one of claims 1 to 4.

## Patentansprüche

1. Verfahren mit einem Endgerät zur Aufzeichnung von Kommunikationsdaten des Terminals (140), **dadurch gekennzeichnet, dass** das Verfahren umfasst:
Bestimmen (502) an dem Endgerät eines Betriebsmodus des Endgeräts, wobei das Endgerät geeignet ist, in wenigstens zwei, einen Infrastrukturbetriebsmodus (608) und einen Direktbetriebsmodus (602) einschließenden, Betriebsmodi zu laufen;
Aufzeichnen an dem Endgerät (504) von Kommunikationsdaten des Endgeräts auf der Basis, ob der bestimmte Betriebsmodus der Direktbetriebsmodus (602) ist;
Ändern des Betriebsmodus des Endgeräts vom Direktbetriebsmodus in den Infrastrukturbetriebsmodus;
Anpassen der Aufzeichnung auf der Basis der Änderung des Betriebsmodus, so dass die Aufzeichnung unterbrochen wird, wenn der Betriebsmodus des Endgeräts der Infrastrukturbetriebsmodus ist; und
Abgeben (612) der aufgezeichneten Kommunikationsdaten an einen Server (108), wenn der Betriebsmodus des Endgeräts der Infrastrukturbetriebsmodus (608) ist.

2. Verfahren nach Anspruch 1, **dadurch gekennzeichnet, dass** das Abgeben Senden (612) der aufgezeichneten Kommunikationen als Reaktion auf das Empfangen einer Abfrage (610) für aufgezeichnete Kommunikationen umfasst.

3. Verfahren nach Anspruch 1 oder 2, **dadurch gekennzeichnet, dass** das Abgeben Senden (612) der aufgezeichneten Kommunikationen als Reaktion auf das Eingeben des Infrastrukturbetriebsmodus (608) umfasst.

4. Verfahren nach einem der vorhergehenden Ansprüche, **dadurch gekennzeichnet, dass** die Kommunikationsdaten eine Kommunikationsangabe (404, 406, 408, 410) und eine oder mehrere der folgenden, auf die Kommunikationsangabe bezogenen Daten in Verbindung mit der Kommunikationsangabe aufweisen: Angabentyp (402), Angabenrichtung (412), Lokalisierung (414), Zeit (418), kommunizierende Gemeinschaftsidentifikation (420), Gruppenidentifikation (422).

5. Endgerät, **dadurch gekennzeichnet, dass** das Endgerät aufweist:
Mittel zur Festlegung (502) eines Betriebsmodus des Endgeräts, wobei das Endgerät geeignet ist, in wenigstens zwei, einen Infrastrukturbetriebsmodus und einen Direktbetriebsmodus einschließenden, Betriebsmodi zu laufen, und
Mittel zur Aufzeichnung (504) von Kommunikationsdaten des Endgeräts auf der Basis, dass der festgelegte Betriebsmodus der Direktbetriebsmodus ist;
Mittel zur Änderung des Betriebsmodus des Endgeräts vom Direktbetriebsmodus in den Infrastrukturbetriebsmodus;
Mittel zur Anpassung der Aufzeichnung auf der Basis der Änderung des Betriebsmodus, so dass die Aufzeichnung unterbrochen wird, wenn der Betriebsmodus des Endgeräts der Infrastrukturbetriebsmodus ist; und
Mittel zum Abgeben der aufgezeichneten Kommunikationsdaten an einen Server, wenn der Betriebsmodus des Endgeräts der Infrastrukturbetriebsmodus ist.

6. Endgerät nach Anspruch 5, **dadurch gekennzeichnet, dass** das Endgerät Mittel zum Senden der aufgezeichneten Kommunikationen als Reaktion auf das Empfangen einer Abfrage (610) für aufgezeichnete Kommunikationen umfasst.

7. Endgerät nach Anspruch 5 oder 6, **dadurch gekennzeichnet, dass** das Endgerät Mittel zum Senden (612) der aufgezeichneten Kommunikationen als Reaktion auf das Eingeben des Infrastrukturbetriebsmodus (608) umfasst.

8. System, **dadurch gekennzeichnet, dass** das System ein Endgerät nach einem der Ansprüche 5 bis 7 und einen Server (108) umfasst, der Mittel zur Rekonstruktion (614) von Kommunikationen aus den aufgezeichneten Kommunikationsdaten, die von dem Endgerät empfangen worden sind, einschließt.

9. Computerprogrammprodukt, **dadurch gekennzeichnet, dass** das Computerprogrammprodukt Computerprogrammanweisungen umfasst, die, wenn sie in einem Prozessor weiter abgearbeitet werden, bewirken, dass der Prozessor das Verfahren nach einem der Ansprüche 1 bis 4 ausführt.

## Revendications

1. Procédé par un terminal pour enregistrer des données de communications du terminal (140), **caractérisé en ce que** le procédé comprend :
une détermination (502), par le terminal, d'un mode de fonctionnement dudit terminal, le terminal étant capable de fonctionner dans au moins deux modes de fonctionnement comprenant un mode de fonctionnement infrastructure (608) et un mode de fonctionnement direct (602) ;
un enregistrement, par le terminal (504), de données de communications du terminal, en fonction de si le mode de fonctionnement déterminé est le mode de fonctionnement direct (602) ;
un changement du mode de fonctionnement du terminal du mode de fonctionnement direct au mode de fonctionnement infrastructure ;
une adaptation de l'enregistrement sur la base du changement du mode de fonctionnement de telle sorte que l'enregistrement est arrêté, lorsque le mode de fonctionnement du terminal est le mode de fonctionnement infrastructure ; et
une fourniture (612) de données de communications enregistrées à un serveur (108), lorsque le mode de fonctionnement du terminal est le mode de fonctionnement infrastructure (608).

2. Procédé selon la revendication 1, **caractérisé en ce que** la fourniture comprend un envoi (612) des communications enregistrées en réponse à une réception d'une sollicitation (610) pour des communications enregistrées.

3. Procédé selon la revendication 1 ou 2, **caractérisé en ce que** la fourniture comprend un envoi (612) des communications enregistrées en réponse au passage au mode de fonctionnement infrastructure (608).

4. Procédé selon l'une quelconque des revendications précédentes, **caractérisé en ce que** les données de communications comprennent un élément de communications (404, 406, 408, 410) et une ou plusieurs des données suivantes relatives à un élément de communications en association avec l'élément de communications : type d'élément (402), direction de l'élément (412), localisation (414), temps (418), identifiant de partie communicante (420), identifiant de groupe (422).

5. Terminal **caractérisé en ce que** le terminal comprend :
des moyens pour déterminer (502) un mode de fonctionnement du terminal, le terminal étant capable de fonctionner dans au moins deux modes de fonctionnement comprenant un mode de fonctionnement infrastructure et un mode de fonctionnement direct, et
des moyens pour enregistrer (504) des données de communications du terminal, sur la base du fait que le mode de fonctionnement déterminé est le mode de fonctionnement direct ;
des moyens pour changer le mode de fonctionnement du terminal du mode de fonctionnement direct au mode de fonctionnement infrastructure ;
des moyens pour adapter l'enregistrement sur la base du changement de mode de fonctionnement de telle sorte que l'enregistrement est arrêté, lorsque le mode de fonctionnement du terminal est le mode de fonctionnement infrastructure ; et
des moyens pour fournir les données de communications enregistrées à un serveur, lorsque le mode de fonctionnement du terminal est le mode de fonctionnement infrastructure.

6. Terminal selon la revendication 5, **caractérisé en ce que** le terminal comprend des moyens pour envoyer les communications enregistrées en réponse à une réception d'une sollicitation (610) pour des communications enregistrées.

7. Terminal selon la revendication 5 ou 6, **caractérisé en ce que** le terminal comprend des moyens pour envoyer (612) les communications enregistrées en réponse au passage au mode de fonctionnement infrastructure (608).

8. Système **caractérisé en ce que** le système comprend un terminal selon l'une quelconque des revendications 5 à 7, et un serveur (108) comprenant des moyens pour reconstruire (614) des communications à partir des données de communications enregistrées reçues du terminal.

9. Produit de programme d'ordinateur **caractérisé en ce que** le produit de programme d'ordinateur comprend des instructions de programme d'ordinateur qui, lorsqu'elles sont exécutées sur un processeur, amènent le processeur à exécuter le procédé selon l'une quelconque des revendications 1 à 4.
